# EUROPÄISCHE PATENTSCHRIFT

(11) **EP 3 311 496 B1**
(45) Veröffentlichungstag und Bekanntmachung des Hinweises auf die Patenterteilung: **25.12.2019**
(21) Anmeldenummer: 16729256.4
(22) Anmeldetag: 14.06.2016
(51) Int. Cl.: H04B 1/00, H04B 7/06, H04B 1/04, H04B 1/18, H04W 52/02, H04W 72/08, H04W 76/15

(54) **VERFAHREN UND VORRICHTUNG ZUR SIGNALÜBERTRAGUNG MIT SENDEAKTIVITÄTSDETEKTION**
METHOD AND APPARATUS FOR TRANSMITTING SIGNALS WITH TRANSMITTING ACTIVITY DETECTION
PROCÉDÉ ET DISPOSITIF DE TRANSMISSION DE SIGNAL AVEC DÉTECTION D'ACTIVITÉ D'ÉMISSION

(30) Priorität: 18.06.2015 DE 102015211278
(43) Veröffentlichungstag der Anmeldung: 25.04.2018
(73) Patentinhaber: Laird Dabendorf GmbH, 15806 Zossen (DE); Audi AG, 85045 Ingolstadt (DE)
(72) Erfinder: BATHICH, Khaled, 13310 Safat (KW); NAST, Helmut, 12557 Berlin (DE); JACOBI, Raimo, 10318 Berlin (DE); SPEHL, Jürgen, 85139 Wettstetten (DE)
(74) Vertreter: Ramrath, Lukas
(86) Internationale Anmeldenummer: PCT/EP2016/063575
(87) Internationale Veröffentlichungsnummer: WO 2016/202773

(56) Entgegenhaltungen:
- DE-A1-102009 027 358
- US-A1- 2009 061 852
- US-A1- 2010 120 466
- US-A1- 2011 250 914
- US-A1- 2013 040 671

## Beschreibung

Die Erfindung betrifft eine Vorrichtung und ein Verfahren zur Signalübertragung, insbesondere zwischen einer Mehrzahl von Signalanschlüssen von mehreren Endgeräten und einer Mehrzahl von Antennen.

Es existieren eine Vielzahl von Endgeräten, die während des Betriebs eine drahtlose Verbindung zur Datenübertragung von und zu dem Endgerät benötigen. Derartige Endgeräte können insbesondere portable Endgeräte wie z.B. Mobilfunktelefone und Tablet-PCs, aber auch Computer und ähnliche Endgeräte sein. Weiter zählen zu solchen Endgeräten auch Steuergeräte von Systemen, die nicht notwendigerweise zur unmittelbaren Bedienung durch einen Nutzer vorgesehen sind.

Z.B. wird in Kraftfahrzeugen eine Vielzahl von Endgeräten verwendet, die zur Ausführung von gewünschten Funktionen über eine drahtlose Verbindung Daten übertragen. Derartige Steuergeräte können z.B. Steuergeräte eines Infotainmentsystems des Fahrzeugs sein. Selbstverständlich können auch andere Fahrzeugsysteme, z.B. Assistenz- oder Notfallsysteme des Fahrzeugs derartige Steuergeräte umfassen. So ist z.B. zur zuverlässigen Ausführung einer sogenannten eCall-Funktion eine drahtlose Verbindung eines entsprechenden Steuergerätes zu einer externen Basisstation notwendig.

Weiter ist es bekannt, dass in Fahrzeugen auch portable Endgeräte, insbesondere Mobilfunktelefone, betrieben werden. Diese benötigen zur Herstellung einer Telefonverbindung sowie zur Herstellung einer Datenverbindung ebenfalls eine drahtlose Verbindung.

Üblicherweise werden drahtlose Verbindungen derartiger Endgeräte über mindestens eine Antenne im Fahrzeug hergestellt. Existierende Lösungen sehen vor, für jedes Endgerät mindestens eine Antenne vorzusehen, über die die entsprechende drahtlose Verbindung aufgebaut wird. Eine derartige Konfiguration hat jedoch einen hohen Bauraumbedarf und erfordert einen hohen Konstruktionsaufwand. So ist es im Bereich von Fahrzeugen, insbesondere Kraftfahrzeugen, aufgrund des begrenzten Bauraums schwierig, für jedes Endgerät einen Bauraum für eine entsprechende Antenne vorzusehen.

Die DE 10 2012 014 548 B3 offenbart eine Mobilfunkvorrichtung für einen Kraftwagen, die ein erstes Mobilfunkmodul und ein zweites Mobilfunkmodul aufweist. Des Weiteren sind eine erste Antenne und eine zweite Antenne zum Übertragen von Mobilfunksignalen bereitgestellt. Weiter ist eine Schalteinrichtung vorgesehen, die mit den Antennen und einem jeweiligen Signalanschluss der Mobilfunkmodule verbunden ist und die dazu ausgelegt ist, in Abhängigkeit von einem Schaltsignal zwischen einem ersten Schaltzustand und einem zweiten Schaltzustand umzuschalten. Die Druckschrift offenbart, dass die Mobilfunkvorrichtung mehr Signalanschlüsse als Antennen umfasst. Das Schaltsignal wird hierbei jedoch von einem Mobilfunkmodul erzeugt, welches somit notwendigerweise Teil der Mobilfunkvorrichtung ist. Somit ist die vorgeschlagene Schalteinrichtung nur dann einsetzbar, wenn wenigstens ein Mobilfunkmodul vorhanden ist, welches ein entsprechendes Schaltsignal erzeugen kann.

Die US 2010/120466 A1 offenbart ein Verfahren, eine Vorrichtung und ein Computerprogramm zum Verschalten von Antennen in einer Multi-Antennen-Multi-Empfänger/Sender-Vorrichtung.

Die US 2013/040671 A1 offenbart eine Vorrichtung zum Zuordnen von Antennen zu Transceivern.

Die US 2009/061852 A1 offenbart ein zelluläres Kommunikationssystem zur Kommunikation und Steuerung eines Automobil-Türschloss.

Die US 2011/250914 A1 offenbart eine Vorrichtung zum Konfigurieren von Kommunikationspfaden in Funkkommunikationssystemen.

Die DE 10 2009 027 358 A1 offenbart eine Lösung, mittels welcher Signalzweige einer Schaltungsanordnung zur Verarbeitung und/oder zur Beeinflussung von Signalen der Funkkommunikation in Abhängigkeit von der Anwesenheit eines Sendesignals eines mit der betreffenden Schaltungsanordnung betriebenen Kommunikationsendgeräts aktiv oder inaktiv geschaltet werden.

Es stellt sich das technische Problem, eine Vorrichtung und ein Verfahren zur Signalübertragung von und zu einer Mehrzahl von Endgeräten zu schaffen, welche eine zuverlässige Signalübertragung ermöglichen, wobei ein Bauraumbedarf minimiert und ein Anwendungsbereich der Vorrichtung und des Verfahrens vergrößert wird.

Die Lösung des technischen Problems ergibt sich durch die Gegenstände mit den Merkmalen der Ansprüche 1 und 13. Weitere vorteilhafte Ausgestaltungen der Erfindung ergeben sich aus den Unteransprüchen.

Es ist eine Grundidee der Erfindung, eine gezielte signaltechnische Verbindung zwischen Signalanschlüssen und von Antennenanschlüssen über eine Schalteinrichtung in Abhängigkeit eines Betriebsszenarios herzustellen, wobei die Anzahl von Signalanschlüssen größer als die Anzahl von Antennenanschlüssen ist und wobei ein Betriebsszenario in Abhängigkeit einer detektierten Sendeaktivität von Endgeräten, denen die Signalanschlüsse zugeordnet sind, ausgewählt wird.

Vorgeschlagen wird eine Vorrichtung zur Signalübertragung von und zu einer Mehrzahl von Endgeräten. Die Vorrichtung kann insbesondere für eine Übertragung von Hochfrequenzsignalen dienen. Die Vorrichtung dient somit zur Signalübertragung von und zu zumindest zwei Endgeräten, vorzugsweise von und zu drei oder mehr Endgeräten. Die Vorrichtung kann eine Signalübertragung gemäß einem gewünschten oder mehreren gewünschten Standards ermöglichen, insbesondere eines LTE-, eines UMTS- und eines GSM-Standards. Somit können verschiedene Endgeräte, die jeweils Signale gemäß einem dieser Standards übertragen, an die Vorrichtung anschließbar sein. Die Vorrichtung ist hierbei vorzugsweise, jedoch nicht ausschließlich, in Fahrzeugen, insbesondere Kraftfahrzeugen, verwendbar.

Ein Endgerät kann beispielsweise ein Mobilfunktelefon sein. Das Mobilfunktelefon kann hierbei beispielsweise über eine Sende-/Empfangsverstärkereinrichtung an die Vorrichtung angeschlossen werden, die auch als so genannter Compenser bezeichnet werden kann. Auch kann ein Endgerät ein Steuergerät sein. Das Steuergerät kann insbesondere ein Steuergerät eines Fahrzeuges, insbesondere eines Kraftfahrzeuges, sein. Insbesondere kann das Steuergerät ein Steuergerät eines Infotainmentsystems oder eines weiteren Fahrzeugssystems sein. Das Steuergerät kann beispielsweise eine sogenannte eCall-Funktion ausführen.

Die Vorrichtung weist eine Anzahl von Signalanschlüssen und eine Anzahl von Antennenanschlüssen auf. Die Vorrichtung weist hierbei mindestens zwei Antennenanschlüsse auf. An einen Signalanschluss der Vorrichtung kann ein Endgerät angeschlossen werden, z.B. über einen korrespondierenden Signalanschluss des Endgeräts. Der Anschluss kann beispielsweise galvanisch erfolgen. Jedoch sind auch andere Anschlussarten vorstellbar. An einen Antennenanschluss kann eine Antenne oder ein gleichwirkendes Element angeschlossen werden, insbesondere galvanisch. Der Signalanschluss, an den ein Endgerät angeschlossen werden kann, kann als der dem Endgerät zugeordnete Signalanschluss bezeichnet werden.

Ein Signalanschluss ist hierbei ein Hauptanschluss oder ein Nebenanschluss. Der Hauptanschluss oder Nebenanschluss kann hierbei einen Typ des Signalanschlusses bezeichnen. Im Sinne dieser Erfindung kann als Hauptanschluss ein Signalanschluss bezeichnet werden, der in einem Normalbetriebszustand zwingend mit einem Antennenanschluss bzw. einer Antenne verbunden sein muss, um eine zuverlässige und ungestörte Datenübertragung von und zu einem an diesen Hauptanschluss angeschlossenen Endgerät zu ermöglichen. Mit anderen Wort kann ein Endgerät mit nicht angeschlossenem Hauptanschluss im Normalbetriebszustand keine Netzverbindung aufbauen. Im Normalbetriebszustand sind also sowohl Endgeräte als auch Antennen an die Vorrichtung angeschlossen. Die zuverlässige und ungestörte Datenübertragung ist hierbei insbesondere für ein Endgerät im aktiven Sendebetrieb zu gewährleisten, wobei dieses Endgerät im aktiven Sendebetrieb Signale sendet und empfängt. Somit kann im aktiven Sendebetrieb insbesondere eine signaltechnische Verbindung, z.B. eine galvanische Verbindung, des Endgeräts mit einer Antenne bereitgestellt werden, wobei diese Verbindung sowohl zur Signalübertragung für das Senden als auch zur Signalübertragung für das Empfangen dient.

Ein Nebenanschluss kann einen Signalanschluss bezeichnen, der in dem Normalbetriebszustand nicht notwendigerweise oder unbedingt zur zuverlässigen und ungestörten Datenübertragung mit einem Antennenanschluss bzw. einer Antenne verbunden sein muss. Ein Nebenanschluss kann beispielsweise einen Mehrwege-Empfang von Signalen ermöglichen, wodurch eine Datenrate beim Empfang von Signalen erhöht wird. Weiter kann ein Nebenanschluss ein sogenannter Backup-Anschluss sein, der eine Datenübertragung von und zu dem Endgerät in einem Fehlerbetriebszustand ermöglicht. Dies wird nachfolgend noch näher erläutert.

Ein Endgerät kann hierbei einen korrespondierenden Hauptanschluss aufweisen, wobei ein Hauptanschluss des Endgeräts mit einem Hauptanschluss der Vorrichtung verbunden wird. Weiter kann ein Endgerät einen korrespondierenden Nebenanschluss aufweisen, wobei der Nebenanschluss des Endgerätes mit einem Nebenanschluss der Vorrichtung verbunden wird.

Der Normalbetriebszustand kann einen Betriebszustand bezeichnen, in dem eine Signalübertragung über alle Hauptanschlüsse und alle Antennenanschlüsse möglich ist. In einem davon abweichenden Fehlerbetriebszustand kann beispielsweise ein an einen Antennenanschluss angeschlossene Antenne und/oder der Hauptanschluss des Endgeräts nicht oder nur eingeschränkt funktionsfähig sein.

Weiter ist einem Endgerät mindestens ein Hauptanschluss zugeordnet. Dies bedeutet, dass die Vorrichtung für jedes anschließbare Endgerät mindestens einen Hauptanschluss aufweist. Weist das Endgerät z.B. nur einen korrespondierenden Hauptanschluss auf, so kann dem Endgerät genau ein Hauptanschluss der Vorrichtung zugeordnet sein. Mit diesem Hauptanschluss wird der endgeräteseitige Hauptanschluss verbunden. Es ist selbstverständlich auch vorstellbar, dass ein Endgerät mehrere Hauptanschlüsse aufweist, wobei jedem dieser endgeräteseitigen Hauptanschlüsse ein Hauptanschluss der Vorrichtung zugeordnet werden kann. Weiter ist vorstellbar, dass ein Endgerät neben dem mindestens einen Hauptanschluss auch einen Nebenanschluss aufweist, wobei diesem endgeräteseitigen Nebenanschluss dann genau ein Nebenanschluss der Vorrichtung zugeordnet wird, der mit dem Nebenanschluss des Endgeräts verbunden wird. Somit kann einem Endgerät neben mindestens einem Hauptanschluss auch mindestens ein Nebenanschluss zugeordnet sein.

Weiter ist die Anzahl von Signalanschlüssen größer als die Anzahl von Antennenanschlüssen. Dies ermöglicht, die Anzahl der notwendigen Antennen zu reduzieren. Allerdings kann die Anzahl von Hauptanschlüssen der Vorrichtung gleich der Anzahl von anschließbaren Endgeräten oder größer als diese Anzahl sein.

Weiter umfasst die Vorrichtung mindestens ein Verbindungselement zur Herstellung mindestens einer, vorzugsweise mehrerer voneinander verschiedenen, signaltechnischen Verbindung(en). Eine signaltechnische Verbindung kann auch als Signalzweig bezeichnet werden. Nachfolgend kann der Begriff "Verbinden" ein derartiges "signaltechnisches Verbinden" bezeichnen. Beispielsweise kann der Begriff "Verbinden" ein galvanisches Verbinden bezeichnen. Ein Verbindungselement kann insbesondere ein Schalterelement oder ein Wechselschalterelement sein. Ein Wechselschalterelement kann insbesondere als SPDT-Element (Single Pole Double Throw-Element) ausgebildet sein. Vorzugsweise umfasst die Vorrichtung mehrere Wechselschalterelemente.

Ein Verbindungselement kann auch ein Splitter-Element sein. Vorzugsweise umfasst die Vorrichtung auch mehrere Splitter-Elemente.

Weiter ist jeder Hauptanschluss mit jedem Antennenanschluss über eine Signalverbindung, also einen Signalzweig, verbindbar. Dies bedeutet, dass jeder Hauptanschluss mit jedem Antennenanschluss über eine der herstellbaren Signalverbindungen verbunden werden kann. Somit können galvanische Verbindungsabschnitte sowie die Verbindungselemente derart angeordnet sein, dass jeder Hauptanschluss mit jedem Antennenanschluss über eine mittels des Verbindungselements herstellbare Signalverbindung galvanisch verbindbar ist. Eine galvanische Verbindung kann durch eine Mikrostreifenleitung bereitgestellt werden oder eine Mikrostreifenleitung umfassen. Ein Signalverbindungsabschnitt kann somit ebenfalls durch eine Mikrostreifenleitung oder einen Abschnitt davon bereitgestellt werden bzw. eine Mikrostreifenleitung oder einen Abschnitt davon umfassen.

Die Vorrichtung kann eine Steuereinrichtung zur Steuerung eines Betriebs der Verbindungselemente umfassen. Die Steuereinrichtung kann insbesondere Schaltzustände der Schaltelemente einstellen.

Die Anordnung von galvanischen Signalverbindungsabschnitten sowie der Verbindungselemente und gegebenenfalls Splitter-Elemente kann auch als Schalteinrichtung bezeichnet werden, die Teil der Vorrichtung sein kann. Über diese Schalteinrichtung ist somit jeder Hauptanschluss mit jedem Antennenanschluss verbindbar. Weiter kann jeder Nebenanschluss mit mindestens einem, ausgewählten oder mit allen Antennenanschluss/Antennenanschlüssen verbindbar sein, insbesondere galvanisch verbindbar sein. Die Anzahl der Antennenanschlüsse kann gleich der Anzahl von Hauptanschlüssen sein.

Über die Verbindungselemente und gegebenenfalls vorhandene Splitter-Elemente können verschiedene Sende/Empfangszweige sowie verschiedene Empfangszweige hergestellt werden. Ein Sende-/Empfangszweig bezeichnet hierbei eine signaltechnische Verbindung, die zum Senden und Empfangen von Signalen dienen kann, beispielsweise im Frequenz- oder Zeitduplexmodus. Somit dient der Sende-/Empfangszweig zur Übertragung von Signalen von einem Signalanschluss zu einem Antennenanschluss als auch von einem Antennenanschluss zu einem Signalanschluss. Ein Empfangszweig dient ausschließlich zur Übertragung von Signalen von einem Antennenanschluss zu einem Signalanschluss.

Die Vorrichtung kann weiter mindestens eine, vorzugsweise jedoch mehrere, Verstärkereinrichtung(en) umfassen. Eine Verstärkereinrichtung kann insbesondere derart angeordnet sein, dass diese Teil eines herstellbaren Empfangssignalzweigs ist. Somit kann die Verstärkereinrichtung insbesondere zur Verstärkung von Empfangssignalen dienen. Alternativ oder kumulativ ist es jedoch auch möglich, eine Verstärkereinrichtung derart anzuordnen, dass diese Verstärkereinrichtung Teil eines herstellbaren Sendesignalzweigs ist und somit zur Verstärkung von Sendesignalen dienen kann.

Weiter können an die Antennenanschlüsse angeschlossene Antennen auch Teil der vorgeschlagenen Vorrichtung sein. Es ist auch möglich, dass an die Signalanschlüsse angeschlossene Endgeräte Teil der vorgeschlagenen Vorrichtung sind.

Erfindungsgemäß umfasst die Vorrichtung mindestens eine Einrichtung zur Sendeaktivitätsdetektion. Durch die Einrichtung zur Sendeaktivitätsdetektion ist ein sendeaktiver Hauptanschluss in Abhängigkeit einer Signaleigenschaft eines Signals detektierbar, wobei das Signal auf einem Signalverbindungsabschnitt, der mit dem entsprechenden Hauptanschluss verbunden ist, anliegt. Das anliegende Signal kann ein über den Signalverbindungsabschnitt übertragenes Signal, insbesondere ein Sendesignal, sein. Ein sendeaktiver Hauptanschluss kann ein Hauptanschluss sein, über den ein an diesen Hauptanschluss angeschlossenes Endgerät ein Signal sendet.

Die Signaleigenschaft ist vorzugsweise ein Signalpegel des Signals. Ein sendeaktiver Hauptanschluss wird detektiert, wenn ein Signalpegel des Signals größer als ein vorbestimmter Schwellwert ist.

Die Einrichtung zur Sendeaktivitätsdetektion kann hierbei mindestens eine Einrichtung zur Erfassung der Signaleigenschaft und mindestens eine Auswerteeinrichtung umfassen. Die Einrichtung zur Erfassung der Signaleigenschaft kann die Erfassung für jeden Signalverbindungsabschnitt einer Anzahl von Signalverbindungsabschnitten durchführen, wobei jeder dieser Signalverbindungsabschnitte jeweils mit einem der Hauptanschlüsse galvanisch verbunden ist. Selbstverständlich ist es jedoch auch vorstellbar, dass die Einrichtung zur Sendeaktivitätsdetektion mehrere Einrichtungen zur Erfassung der Signaleigenschaft umfasst, die die Erfassung jeweils für einen oder mehrere dieser Signalverbindungsabschnitte ermöglichen. Selbstverständlich kann die Einrichtung zur Sendeaktivitätsdetektion auch mehrere Auswerteeinrichtungen umfassen.

Die oder eine Auswerteeinrichtung kann hierbei durch die vorhergehend erläuterte Steuereinrichtung bereitgestellt werden oder Teil davon sein. Die Steuereinrichtung, die Auswerteeinrichtung oder eine entsprechende Steuer- und Auswerteeinrichtung können beispielsweise durch einen Mikrocontroller bereitgestellt werden.

Die Einrichtung zur Sendeaktivitätsdetektion ist hierbei eine von einem Endgerät verschiedene Einrichtung. Insbesondere bezeichnen die Einrichtung zur Sendeaktivitätsdetektion und ein Endgerät baulich voneinander getrennt ausgebildete Einrichtungen. Allerdings können die Einrichtung zur Sendeaktivitätsdetektion und ein Endgerätesignal signaltechnisch verbunden sein.

Weiter sind signaltechnische Verbindungen, also Signalzweige, der Signalanschlüsse mit den Antennenanschlüssen in Abhängigkeit der detektierten sendeaktiven Hauptanschlüsse herstellbar. Weiter, insbesondere zusätzlich, können die signaltechnischen Verbindungen in Abhängigkeit der Anzahl der einem Endgerät zugeordneten Signalanschlüsse herstellbar sein. Weiter, insbesondere zusätzlich, können die signaltechnischen Verbindungen in Abhängigkeit des Typs der Signalanschlüsse herstellbar sein. Weiter können die signaltechnischen Verbindungen, wie nachfolgend noch näher beschrieben, in Abhängigkeit einer Funktionsfähigkeit der Antennenanschlüsse herstellbar sein. Mit anderen Worten ist für jeden Signalanschluss entweder keine oder aber eine signaltechnische Verbindung des Signalanschluss mit mindestens einem der Antennenanschlüsse herstellbar.

Somit können die Signalverbindungen in Abhängigkeit eines Betriebsszenarios, in Abhängigkeit der Anzahl und/oder in Abhängigkeit des Typs der Signalanschlüsse hergestellt werden. Dies kann bedeuten, dass die Signalverbindungen in Abhängigkeit des Betriebsszenarios sowie in Abhängigkeit einer Signalanschlusskonfiguration und -zuordnung hergestellt werden. Das Betriebsszenario bezeichnet insbesondere ein SendeBetriebsszenario. Insbesondere sind die signaltechnischen Verbindungen derart herstellbar, dass jeder Hauptanschluss der Vorrichtung mit einem Antennenanschluss verbunden ist. Weiter können die signaltechnischen Verbindungen derart hergestellt werden, dass ein, ausgewählte oder alle Nebenanschlüsse mit einem Antennenanschluss verbunden sind. Die entsprechenden signaltechnischen Verbindungen können z.B. mittels der Steuereinrichtung hergestellt werden, die das mindestens eine Verbindungselement entsprechend der herzustellenden signaltechnischen Verbindungen ansteuert, insbesondere die entsprechenden Schaltzustände von Wechselschaltelementen einstellt.

Unabhängig von der Anzahl der sendeaktiven Hauptanschlüsse, d.h. für jede Anzahl von sendeaktiven Hauptanschlüssen, kann jeder Hauptanschluss mit einem Antennenanschluss signaltechnisch verbunden sein.
Die vorgeschlagene Vorrichtung dient somit in vorteilhafter Weise der Verbindung mehrerer Endgeräte mit Antennen, wobei verschiedene signaltechnische Verbindungen zwischen Endgeräten und Antennen einstellbar sind, wobei weiter diese verschiedenen Verbindungen unabhängig von einer Ausbildung eines angeschlossenen Endgeräts einstellbar sind. Die Vorrichtung ermöglicht, dass gewünschte Verbindungen betriebsszenarioabhängig eingestellt werden, wobei das Betriebsszenario von der Vorrichtung selbst bestimmt wird. Insbesondere ist kein Endgerät notwendig, welches Steuersignale zur Herstellung der Verbindungen erzeugt. Somit kann die vorgeschlagene Vorrichtung problemlos in bestehenden Systemen, insbesondere in Kraftfahrzeugen, nachgerüstet werden. Mit anderen Worten ergibt sich ein großer Einsatzbereich der vorgeschlagenen Vorrichtung.

In einer weiteren Ausführungsform erfolgt die Verbindung der Hauptanschlüsse und der Nebenanschlüsse mit den Antennenanschlüssen in Abhängigkeit einer vorbekannten Zuordnungsvorschrift. Hierbei können mehrere Zuordnungsvorschriften existieren. Eine Zuordnungsvorschrift kann spezifisch für eine Anzahl der Signalanschlüsse, die Typen der jeweiligen Signalanschlüsse (also Haupt- oder Nebenanschluss), die Zuordnung von Signalanschlusstypen zu den Endgeräten und/oder eine Anzahl der funktionsfähigen Antennenanschlüsse sein. Ein funktionsfähiger Antennenanschluss bezeichnet einen Anschluss, an den eine wie gewünscht funktionsfähige Antenne angeschlossen ist. Die Zuordnungsvorschrift kann somit vorrichtungsspezifisch sein. Auch kann die Zuordnungsvorschrift endgerätespezifisch und/oder antennenspezifisch sein.
So kann beispielsweise eine Zuordnungsvorschrift für eine Vorrichtung mit drei Hauptanschlüssen, zwei Nebenanschlüssen und drei funktionsfähigen Antennenanschlüssen existieren, wobei einem Endgerät ein Hauptanschluss sowie zwei Endgeräten jeweils ein Haupt- und ein Nebenanschluss zugeordnet ist.

Eine Zuordnungsvorschrift enthält weiter Informationen über die sendeaktivitätsabhängigen signaltechnischen Verbindungen der Signalanschlüsse mit den Antennenanschlüssen. Diese Verbindungen können auch als sendeaktivitätsabhängigen Betriebsszenarien der Vorrichtung bezeichnet werden.

Die vorbekannte Zuordnungsvorschrift kann beispielsweise in Form von Zuordnungstabellen gespeichert sein. Diese kann auch als Konfigurationstabelle bezeichnet werden. Es ist möglich, dass die vorhergehend erläuterte Steuereinrichtung Zugriff auf die Informationen der Zuordnungsvorschrift hat. Hierdurch ergibt sich in vorteilhafter Weise eine einfache Auswahl und Einstellung der entsprechenden signaltechnischen Verbindung.

Mit anderen Worten sind durch die Zuordnungsvorschrift für eine bestimmte Konfiguration der vorgeschlagenen Vorrichtung für verschiedene Sendebetriebsszenarien die herzustellenden signaltechnischen Verbindungen der Signalanschlüsse mit den Antennenanschlüssen festgelegt. Ein Sendebetriebsszenario ist hierbei durch die Anzahl der sendeaktiven Hauptanschlüsse und gegebenenfalls das dem jeweils sendeaktiven Hauptanschluss zugeordnete Endgerät festgelegt.

Die Zuordnungsvorschrift kann in vorteilhafter Weise auch herstellerspezifisch erstellt werden. Dies bedeutet, dass jeder Hersteller, insbesondere Automobilhersteller, für die hergestellten Fahrzeuge oder Fahrzeugtypen eine Zuordnungsvorschrift erstellen kann, die von einer Zuordnungsvorschrift anderer Hersteller verschieden ist.

Die Zuordnungsvorschrift kann hierbei voreingestellt sein und z.B. bei der Herstellung der Vorrichtung konfiguriert werden. Weiter kann die Zuordnungsvorschrift veränderbar sein, beispielsweise durch eine nutzerspezifische Eingabe über eine entsprechende Eingabeeinrichtung.

In einer weiteren Ausführungsform werden im Falle, dass kein sendeaktiver Signalanschluss detektiert wird, alle Hauptanschlüsse mit einem der Antennenanschlüsse mindestens ein Nebenanschluss mit einem der verbleibenden Antennenanschlüsse verbunden. Diese Signalverbindungen werden also in einem Betriebsszenario hergestellt, in dem kein sendeaktiver Hauptanschluss detektiert wird. Weiter können verschiedene Nebenanschlüsse mit jeweils einem der verbleibenden Antennenanschlüsse verbunden werden.

Dies bedeutet, dass jedes Endgerät über seinen Hauptanschluss Signale empfangen kann. Weiter sind alle Hauptanschlüsse mit demselben Antennenanschluss verbunden. Nebenanschlüsse können mit den weiter vorhandenen Antennenanschlüssen verbunden sein, z.B. mit demselben oder jeweils mit verschiedenen Antennenanschlüssen. Hierdurch ergibt sich in vorteilhafter Weise, dass eine gewünschte Antenne, z.B. die Antenne mit dem niedrigsten Richtfaktor oder die Antennen mit der höchsten Empfangsleistung, als Empfangsantenne für alle Endgeräte in diesem Betriebsszenario verwendet werden kann.

In einer weiteren Ausführungsform wird im Falle, dass genau ein sendeaktiver Hauptanschluss detektiert wird, dieser sendeaktive Hauptanschluss mit einem der Antennenanschlüsse verbunden. Ebenfalls werden die verbleibenden Hauptanschlüsse mit einem der verbleibenden Antennenanschlüsse verbunden, insbesondere mit demselben verbleibenden Antennenanschluss. Ebenfalls wird mindestens ein Nebenanschluss mit einem weiteren der verbleibenden Antennenanschlüsse verbunden. Diese Signalverbindungen werden also in einem Betriebsszenario hergestellt, in dem genau ein sendeaktiver Signalanschluss detektiert wird. Hierdurch wird in vorteilhafter Weise sichergestellt, dass einem sendenden Endgerät genau eine Antenne zur Verfügung gestellt wird, während den nur empfangenen Endgeräten eine gemeinsame Antenne zur Verfügung gestellt wird. Des Weiteren können noch weiter verfügbare Antennen den Nebenanschlüssen zugeordnet werden, beispielsweise um den vorhergehend erläuterten Mehrwegeempfang zu ermöglichen.

In einer weiteren Ausführungsform werden im Falle, dass mehr als ein sendeaktiver Hauptanschluss detektiert wird, aber nicht alle Hauptanschlüsse sendeaktiv sind, die sendeaktiven Hauptanschlüsse jeweils mit voneinander verschiedenen Antennenanschlüssen verbunden. Weiter werden die verbleibenden Hauptanschlüsse mit einem der verbleibenden Antennenanschlüsse, insbesondere demselben verbleibenden Antennenanschluss, verbunden. Diese Signalverbindungen werden also in einem Betriebsszenario hergestellt, in dem mehr als ein sendeaktiver Hauptanschluss detektiert wird, jedoch nicht alle Hauptanschlüsse sendeaktiv sind. Hierdurch wird ebenfalls in vorteilhafter Weise jedem sendeaktiven Endgerät jeweils eine Antenne zur Verfügung gestellt, wobei gleichzeitig ein Empfang für die nicht sendeaktiven Endgeräte über eine verbleibende Antenne gewährleistet wird.

In diesem Betriebsszenario ist es möglich, mindestens ein Nebenanschluss mit einem weiteren der verbleibenden Antennenanschlüsse verbunden wird, falls dieser Antennenanschluss noch nicht mit einem Hauptanschluss verbunden ist. Die Verbindung des Nebenanschluss mit einem weiteren der verbleibenden Antennenanschlüsse ist z.B. nicht für einen Nebenanschluss eines nicht sendeaktiven Endgeräts möglich, wenn diesem nicht sendeaktiven Endgerät ein Haupt- und dieser Nebenanschluss zugeordnet ist, da in diesem Fall für den Nebenanschluss des nicht sendeaktiven Endgeräts keine freie Antenne zur Verfügung steht.

In einer weiteren Ausführungsform wird ein Nebenanschluss, der demselben Endgerät wie einer der sendeaktiven Hauptanschlüsse zugeordnet ist, mit dem verbleibenden Antennenanschluss verbunden. Hierdurch kann beispielsweise in vorteilhafter Weise ein Mehrwege-Empfang sichergestellt werden.

In einer weiteren Ausführungsform werden im Falle, dass alle Hauptanschlüsse als sendeaktive Hauptanschlüsse detektiert werden, die sendeaktiven Hauptanschlüsse jeweils mit voneinander verschiedenen Antennenanschlüssen verbunden. Diese Signalverbindungen werden also in einem Betriebsszenario hergestellt, in dem alle Hauptanschlüsse als sendeaktive Hauptanschlüsse detektiert werden. In diesem Fall kann kein Nebenanschluss mit einem Antennenanschluss verbunden werden. Hierdurch ergibt sich in vorteilhafter Weise, dass auch in dem Fall, dass alle Endgeräte sendeaktiv sind, diesen jeweils eine Antenne zur Verfügung gestellt werden kann.

In einer weiteren Ausführungsform wird die Signalverbindung von sendeaktiven Hauptanschlüssen mit den Antennenanschlüssen in Abhängigkeit mindestens einer Antenneneigenschaft hergestellt. Die Antenneneigenschaft kann insbesondere ein Richtfaktor sein. Hierbei kann eine Höhe des Richtfaktors einen Grad der Abschirmung der jeweiligen Antenne, beispielsweise durch weitere Bauteile des Fahrzeuges, repräsentieren. So ist es möglich, dass bei genau einem sendeaktiven Hauptanschluss dieser mit dem Antennenanschluss verbunden wird, dessen Antenne den geringsten Richtfaktor aufweist. Sind mehrere Hauptanschlüsse sendeaktiv, so können diese mit den Antennenanschlüssen verbunden werden, deren Richtfaktoren geringer sind als die Richtfaktoren der verbleibenden Antennenanschlüsse. Auch kann ein bestimmter Hauptanschluss, wenn er sendeaktiv ist, immer mit einer Antenne mit einem ausgewählten Richtfaktor, beispielsweise dem geringsten Richtfaktor, verbunden werden. Eine Zuordnung, welchem sendeaktiven Hauptanschluss in einem Betriebsszenario welcher Antennenanschluss zugeordnet wird, kann in der vorhergehend erläuterten Zuordnungsvorschrift enthalten sein.

Hierdurch ergibt sich in vorteilhafter Weise, dass die sendeaktiven Endgeräte jeweils mit den besten Antennen verbunden werden.

In einer weiteren Ausführungsform umfasst die Vorrichtung mindestens einen Widerstand. Vorzugsweise umfasst die Vorrichtung mehrere Widerstände, insbesondere einen Widerstand pro Signalanschluss. Der Widerstand kann insbesondere als Hochfrequenzwiderstand ausgebildet sein. Der Widerstand ist galvanisch mit einem Signalanschluss verbunden, wobei der Widerstand einen Antennenkennwiderstand simuliert. Dass der Widerstand einen Antennenkennwiderstand simuliert, kann bedeuten, dass der Widerstand den gleichen Wert wie eine an den korrespondierenden Signalanschluss des Endgeräts anzuschließende Antenne aufweist. Hierdurch kann in vorteilhafter Weise erreicht werden, dass Endgeräte, die an die Vorrichtung angeschlossen werden, einen Ausgangswiderstand in Höhe des Antennenkennwiderstands detektieren und somit von einer vorhandenen Antenne ausgehen. Der Widerstand kann insbesondere ein einstellbarer Widerstand sein. Dies kann bedeuten, dass ein Widerstandswert, insbesondere in einem vorbestimmten Wertebereich, eingestellt werden kann. Die Einstellung des Widerstands kann hierbei durch die vorhergehend erläuterte Steuereinrichtung gesteuert werden.

Es ist möglich, dass der Widerstand in Abhängigkeit einer nachfolgend erläuterten detektierten Funktionsfähigkeit einer Antenne eingestellt wird. Ist eine an die Vorrichtung angeschlossene Antenne nicht oder nicht wie gewünscht funktionsfähig, so kann der Widerstand derart eingestellt werden, dass ein Endgerät als Ausgangswiderstand einen Wert detektiert, der nicht in einem vorbestimmten Wertebereich eines Widerstands einer funktionsfähigen Antenne liegt. Hierdurch wird für das Endgerät eine nicht funktionsfähige Antenne simuliert. Das Endgerät kann in diesem Fall eine Fehlerroutine ausführen.

In einer weiteren Ausführungsform umfasst die Vorrichtung mindestens eine Einrichtung zur Prüfung einer Funktionsfähigkeit einer mit einem Antennenanschluss verbundenen Antenne. Die Einrichtung kann insbesondere eine Einrichtung zur Bestimmung oder Messung eines Ausgangswiderstandes eines Antennenanschlusses sein.

Hierdurch kann in vorteilhafter Weise detektiert werden, ob an einem Antennenanschluss eine nicht oder nicht wie gewünscht funktionsfähige Antenne angeschlossen ist. Diese Information kann dann an ein übergeordnetes System übertragen werden. Beispielsweise kann diese Information an ein Kommunikationssystem des Fahrzeugs übertragen werden, in dem die Vorrichtung angeordnet ist. Das Kommunikationssystem kann insbesondere ein Bussystem sein. Hierfür kann die Vorrichtung eine entsprechende Kommunikationsschnittstelle aufweisen.

Beispielsweise kann eine Fehlermeldung generiert und einem Nutzer des Systems angezeigt werden. Weiter kann die Information, wie vorhergehend erläutert, zur Einstellung eines Widerstandes der Vorrichtung genutzt werden.

In einer weiteren Ausführungsform ist die Zuordnungsvorschrift in Abhängigkeit der Anzahl funktionsfähiger Antennen auswählbar. Wird beispielsweise detektiert, dass ein oder mehrere Antennen nicht funktionsfähig sind, so kann eine von der aktuell ausgewählten Zuordnungsvorschrift verschiedene Zuordnungsvorschrift ausgewählt werden, deren Informationen dann in den jeweiligen Betriebsszenarien zur Herstellung der Signalverbindungen mit den verbleibenden funktionsfähigen Antennen genutzt wird.

Hierdurch wird in vorteilhafter Weise die Funktionsfähigkeit im Fehlerfall optimiert.

In einer weiteren Ausführungsform ist ein Nebenanschluss ein Mehrwege-Empfangsanschluss. Alternativ ist ein Nebenanschluss ein Backup-Anschluss. Ein Mehrwege-Empfangsanschluss dient hierbei zur Bereitstellung eines weiteren Empfangszweiges für ein Endgerät und somit zu einer Erhöhung der Übertragungsrate der entsprechenden Signalübertragung. Ein Backup-Anschluss kann einen demselben Endgerät zugeordneten Hauptanschluss ersetzen, wenn keine Signalübertragung über diesen Hauptanschluss mehr möglich ist. Dies bedeutet, dass die Signalübertragung, für die der Hauptanschluss genutzt wird, über den Backup-Anschluss erfolgt.

Erfindungsgemäß wird mindestens ein Signalanschluss bei nicht ausreichender Energieversorgung der Vorrichtung mit einem Antennenanschluss verbunden. Dieser Signalanschluss kann insbesondere ein Backup-Anschluss sein. Der Signalanschluss kann hierbei mit dem Antennenanschluss über mindestens ein Verbindungselement, insbesondere ein Wechselschaltelement, verbunden sein, welches in einem Zustand nicht ausreichender Energieversorgung, beispielsweise in einem stromlosen Zustand, den Antennenanschluss mit dem Signalanschluss verbindet. Bei ausreichender Energieversorgung ist die Signalverbindung zwischen dem Signalanschluss und dem Antennenanschluss zumindest durch dieses Verbindungselement unterbrochen. Ein solches Verbindungselement kann insbesondere ein RF-Relais sein. Ein RF-Relais kann ein Verbindungselement bzw. ein Schaltelement sein, welches auch im Zustand nicht ausreichender Energieversorgung, z.B. im stromlosen Zustand, Sende- und Empfangssignale durchleiten kann.

Hierdurch wird in vorteilhafter Weise erreicht, dass im Falle eines Zustands nicht ausreichender Energieversorgung, beispielsweise bei einem Unfall oder Crash des Fahrzeuges, weiterhin eine Signalübertragung über einen Signalanschluss möglich ist. An einen solchen Signalanschluss kann insbesondere ein Endgerät, welches eine eCall-Funktion ausführt, angeschlossen werden.

Weiter vorgeschlagen wird ein Verfahren zur Signalübertragung von und zu einer Mehrzahl von Endgeräten. Das Verfahren ist mittels einer Vorrichtung gemäß einer der in dieser Erfindung beschriebenen Ausführungsformen ausführbar. Insbesondere wird ein sendeaktiver Hauptanschluss in Abhängigkeit einer Signaleigenschaft eines Signals detektiert, wobei das Signal auf einem Signalverbindungsabschnitt (Signalzweigabschnitt) anliegt, der mit dem Hauptanschluss galvanisch verbunden ist. Dies kann insbesondere mit der vorhergehend erläuterten Einrichtung zur Sendeaktivitätsdetektion erfolgen. Weiter werden signaltechnische Verbindungen der Signalanschlüsse mit den Antennenanschlüssen in Abhängigkeit der detektierten sendeaktiven Anschlüsse hergestellt. Weiter, insbesondere zusätzlich, können die signaltechnischen Verbindungen der Signalanschlüsse mit den Antennenanschlüssen in Abhängigkeit der Anzahl einer einem Endgerät zugeordneten Signalanschlüsse hergestellt werden.

Weiter kann die Verbindung der Hauptanschlüsse und der Nebenanschlüsse mit den Antennenanschlüssen in Abhängigkeit einer vorbekannten Zuordnungsvorschrift erfolgen. Insbesondere kann eine Signalverbindung entsprechend einem der vorhergehend erläuterten Betriebsszenarien hergestellt werden.

In einer weiteren Ausführungsform werden die signaltechnischen Verbindungen unabhängig von vorrichtungsexternen Steuersignalen hergestellt werden. Vorrichtungsexterne Steuersignale können Signale zur Steuerung des Betriebs eines Verbindungselements, insbesondere eines Wechselschalterelements, sein, die nicht von einem Bestandteil der Vorrichtung erzeugt wurden. Ein vorrichtungsexternes Bauteil kann insbesondere ein an die Vorrichtung angeschlossenes Endgerät sein. Dass die signaltechnischen Verbindungen unabhängig von vorrichtungsexternen Steuersignalen hergestellt werden, kann z.B. bedeuten, dass die Verbindungen in Abhängigkeit eines Ausgangssignals mindestens einer Einrichtung zur Sendeaktivitätsdetektion der Vorrichtung hergestellt werden, wobei durch die Einrichtung zur Sendeaktivitätsdetektion ein sendeaktiver Hauptanschluss in Abhängigkeit einer Signaleigenschaft eines Signals detektierbar ist, wobei das Signal auf einem Signalverbindungsabschnitt, der mit dem Hauptanschluss verbunden ist, anliegt. Das Ausgangssignal kann repräsentieren, ob ein Hauptanschluss ein sendeaktiver Hauptanschluss ist oder nicht.

Die Erfindung wird anhand eines Ausführungsbeispiels näher erläutert. Die einzige Figur zeigt ein schematisches Schaltdiagramm einer erfindungsgemäßen Vorrichtung mit angeschlossenen Endgeräten und Antennen.

Nachfolgend bezeichnen gleiche Bezugszeichen Elemente mit gleichen oder ähnlichen technischen Merkmalen.

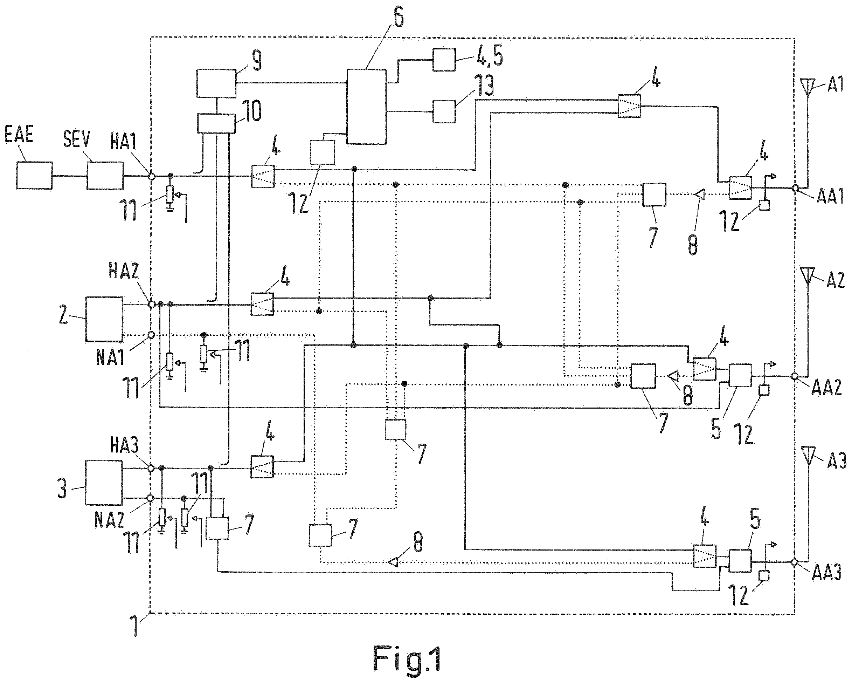

Fig. 1 zeigt ein schematisches Schaltdiagramm einer erfindungsgemäßen Vorrichtung 1. Die Vorrichtung 1 weist einen ersten Hauptanschluss HA1, einen zweiten Hauptanschluss HA2 und einen dritten Hauptanschluss HA3 auf. Weiter weist die Vorrichtung 1 einen ersten Nebenanschluss NA1 und einen zweiten Nebenanschluss NA2 auf. An den ersten Hauptanschluss HA1 ist eine Sende-/Empfängerverstärkungseinrichtung SEV für Mobilfunksignale angeschlossen. Diese ist wiederum mit einer Endgeräteanschlusseinrichtung EAE verbunden. Die Endgeräteanschlusseinrichtung EAE kann auch als Phonebox oder sogenannter Cradle bezeichnet werden. Über die Endgeräteanschlusseinrichtung kann ein nicht dargestelltes erstes Endgerät, insbesondere ein Mobilfunktelefon, mit dem ersten Hauptanschluss HA1 verbunden werden.

An den zweiten Hauptanschluss HA2 und den ersten Nebenanschluss NA1 ist ein zweites Endgerät 2 angeschlossen, welches z.B. ein Steuergerät eines Infotainmentsystems des Fahrzeugs sein kann. Das zweite Endgerät 2 weist hierfür einen korrespondierenden Hauptanschluss und einen korrespondierenden Nebenanschluss auf. An den dritten Hauptanschluss HA3 und den zweiten Nebenanschluss NA2 ist ein drittes Endgerät 3 angeschlossen, welches ebenfalls zwei korrespondierende Signalanschlüsse aufweist. Die Endgeräte 2, 3 können hierbei galvanisch mit den jeweiligen Signalanschlüssen HA1, ... NA2 verbunden sein. Die Hauptanschlüsse HA1, ... HA3 und die Nebenanschlüsse NA1, NA2 bilden hierbei Signalanschlüsse der Vorrichtung 1. Die Hauptanschlüsse HA1, ... HA3 dienen einer Signalübertragung in einem Sendebetrieb der Endgeräte 2, 3. Ebenfalls können diese Hauptanschlüsse HA1, ... HA3 einem Empfangsbetrieb dienen.

Der erste Nebenanschluss NA1 kann als sogenannter Empfangsanschluss ausgebildet sein. Dieser dient einem Empfang von Signalen für einen Mehrwege-Empfangsbetrieb des zweiten Endgerätes 2. Der zweite Nebenanschluss NA2 kann als sogenannter Backup-Anschluss bezeichnet werden. Dieser dient einer Signalübertragung des dritten Endgerätes 3 im Sende- und Empfangsbetrieb in einem Fehlerbetriebszustand.

Weiter weist die Vorrichtung einen ersten Antennenanschluss AA1, einen zweiten Antennenanschluss AA2 und einen dritten Antennenanschluss AA3 auf. An den ersten Antennenanschluss AA1 ist eine erste Antenne A1 angeschlossen. Entsprechend sind an den zweiten und dritten Antennenanschluss AA2, AA3 jeweils eine zweite Antenne A2 und eine dritte Antenne A3 angeschlossen.

Die Vorrichtung 1 umfasst weiter Wechselschaltelemente 4, die beispielsweise als Single Pole Double Throw-Elemente ausgebildet sein können. Weiter umfasst die Vorrichtung 1 weitere Wechselschaltelemente 5, die beispielsweise als RF-Relais-Elemente ausgebildet sein können. Die Wechselschaltelemente 4, 5 können verschiedene Schaltzustände einnehmen. Insbesondere können die Wechselschaltelemente 4, 5 einen Eingangsanschluss mit einem von mehreren Ausgangsanschlüssen verbinden. Die Schaltzustände der Wechselschaltelemente 4, 5 können von einer Auswerte- und Steuereinrichtung 6 gesteuert werden. Über die Wechselschaltelemente 4, 5 können verschiedene galvanische Signalverbindungen (Signalzweige) zwischen den Signalanschlüssen der Vorrichtung 1 und den Antennenanschlüssen AA1, ... AA3 hergestellt werden.

Weiter umfasst die Vorrichtung mehrere Splitter-Elemente 7. Durch die Splitter-Elemente 7 kann ein an einem Eingangsanschluss des Splitter-Elements 7 anliegendes Empfangssignal auf eine Mehrzahl von Ausgangsanschlüssen des Splitter-Elements 7 verteilt werden.

Weiter umfasst die Vorrichtung 1 Verstärkereinrichtungen 8, wobei die Verstärkereinrichtungen 8 ein an einem Eingangsanschluss der Verstärkereinrichtung 8 anliegendes Empfangssignal verstärken.

Weiter umfasst die Vorrichtung 1 eine Einrichtung 9 zur Erfassung eines Signalpegels. Die Einrichtung 9 kann über ein Umschaltelement 10 einen Signalpegel eines Signales erfassen, welches auf einem Signalverbindungsabschnitt anliegt, der mit einem der Hauptanschlüsse HA1, HA2, HA3 galvanisch verbunden ist.

In einem ersten Schaltzustand des Umschaltelements 10 kann beispielsweise ein Signalpegel eines Signals erfasst werden, der auf einem mit dem ersten Hauptanschluss HA1 verbundenen Signalverbindungsabschnitt anliegt. Entsprechend können in weiteren Schaltzuständen des Umschaltelements 10 weitere Signalpegel erfasst werden. Die Einrichtung 9 zur Signalpegelerfassung ist signal- und/oder datentechnisch mit der Steuer- und Auswerteeinrichtung 6 verbunden. Diese kann in Abhängigkeit des erfassten Signalpegels detektieren, ob ein Sendesignal eines Endgeräts 2, 3 über den entsprechenden Hauptanschluss HA1, ... HA3 übertragen wird. Beispielsweise kann ein solches Sendesignal detektiert werden, falls der Signalpegel größer als ein vorbestimmter Schwellwert ist. Ein Signalanschluss, über den ein Sendesignal übertragen wird, kann auch als sendeaktiver Hauptanschluss HA1, HA2, HA3 bezeichnet werden.

In Abhängigkeit der Anzahl von sendeaktiven Hauptanschlüssen HA1, ... HA3 und in Abhängigkeit der einem Endgerät 2, 3 zugeordneten Signalanschlüsse sowie in Abhängigkeit der Art der einem Endgerät 2, 3 zugeordneten Anschlüsse können dann Schaltzustände der Wechselschaltelemente 4, 5 eingestellt werden, um gewünschte Signalverbindungen zwischen den Signal- und Antennenanschlüssen AA1, ..., AA3 herzustellen.

Wird kein sendeaktiver Hauptanschluss HA1, HA2, HA3 detektiert, so werden alle Hauptanschlüsse HA1, ... HA3 mittels der Wechselschaltelemente 4, 5 mit dem ersten Antennenanschluss AA1 verbunden. Die galvanische Verbindung der Hauptanschlüsse HA1, ... HA3 mit dem ersten Antennenanschluss AA1 wird über sogenannte Empfangssignalzweige hergestellt, die in Fig. 1 gepunktet dargestellt sind. Z.B. wird ein von der ersten Antenne A1 empfangenes Signal über den ersten Antennenanschluss AA1, das mit dem ersten Antennenanschluss AA1 galvanisch verbundene Wechselschaltelement 4 zu einer Verstärkereinrichtung 8 übertragen, die mit einem Ausgangsanschluss des Wechselschaltelements 4 verbunden ist. Die Verstärkereinrichtung 8 dient zur Verstärkung dieses Empfangssignales, beispielsweise um Dämpfungen sowie System- und Kabelverluste auszugleichen. Das verstärkte Empfangssignal wird von einer Splitter-Einrichtung 7 aufgeteilt und über weitere Wechselschaltelemente 4 an jeden der Hauptanschlüsse HA1, HA2, HA3 übertragen.

Der erste Nebenanschluss NA1 wird über die Wechselschaltelemente 4, 5 mit dem dritten Antennenanschluss AA3 galvanisch verbunden. Dies ermöglicht einen Mehrwege-Empfang des zweiten Endgeräts 2.

Wird genau ein sendeaktiver Hauptanschluss HA1, ... HA3 detektiert, so wird dieser sendeaktive Hauptanschluss HA1, HA2, HA3 mit einem Antennenanschluss AA1, ... AA3 verbunden, wobei die nicht sendeaktiven Hauptanschlüsse HA1, ... HA3 mit einem der verbleibenden Antennenanschlüsse AA1, ... AA3 verbunden werden. Weiter wird der als Nebenanschluss NA1 mit einem der weiteren verbleibenden Antennenanschlüsse AA1, ... AA3 verbunden. Wird beispielsweise der erste Hauptanschluss HA1 als sendeaktiver Hauptanschluss HA1 detektiert, so kann dieser Hauptanschluss HA1 über Wechselschaltelemente 4 mit dem ersten Antennenanschluss AA1 verbunden werden. Die Verbindung des ersten Hauptanschlusses HA1 mit dem ersten Antennenanschluss AA1 erfolgt über einen sogenannten Sende-/Empfangssignalzweig, der in Fig. 1 als durchgezogene Linie dargestellt ist. Die nicht sendeaktiven Hauptanschlüsse, also der zweite und dritte Hauptanschluss HA2, HA3, können über Wechselschaltelemente 4 mit dem zweiten Antennenanschluss AA2 verbunden werden. Diese Verbindung kann über sogenannte Empfangssignalzweige erfolgen.

Weiter kann in diesem Fall der erste Nebenanschluss NA1 mit dem dritten Antennenanschluss AA3 über Wechselschaltelemente 4, 5 und über einen Empfangssignalzweig verbunden werden.

Werden zwei sendeaktive Hauptanschlüsse HA1, HA2, HA3 detektiert, beispielsweise der erste Hauptanschluss HA1 und der zweite Hauptanschluss HA2, so können diese jeweils mit einem Antennenanschluss AA1, AA2 über entsprechend hergestellte Sende-/Empfangssignalzweige verbunden werden. Beispielsweise kann der erste Hauptanschluss HA1 über einen Sendesignalzweig mit dem ersten Antennenanschluss AA1 und der zweite Hauptanschluss HA2 über einen weiteren Sendesignalzweig mit dem zweiten Antennenanschluss AA2 verbunden werden. In diesem Fall kann der nicht sendeaktive dritte Hauptanschluss HA3 über einen Empfangssignalzweig mit dem dritten Antennenanschluss AA3 verbunden werden. Auch der erste Nebenanschluss NA1 kann in diesem Fall mit dem dritten Antennenanschluss AA3 über einen Empfangssignalzweig verbunden werden. Dies bedeutet, dass ein Mehrwege-Empfang für das zweite Endgerät 2 möglich ist.

Werden jedoch der erste und der dritte Hauptanschluss HA1, HA3 als sendeaktive Hauptanschlüsse detektiert und mit jeweils einem Antennenanschluss, beispielsweise dem ersten und dem dritten Antennenanschluss AA1, AA3, verbunden, so kann keiner der Nebenanschlüsse NA1, NA2 mit dem verbleibenden Antennenanschluss AA2 verbunden werden, da dann der zweite Hauptanschluss HA2 mit diesem Antennenanschluss verbunden wird. In diesem Betriebsszenario ist also kein Mehrwege-Empfang des zweiten Endgeräts 2 möglich.

Werden alle Hauptanschlüsse HA1, ... HA3 als sendeaktive Hauptanschlüsse HA1, ... HA3 detektiert, so können diese jeweils mit einem der Antennenanschlüsse AA1, AA2, AA3 über entsprechende Sendesignalzweige verbunden werden. In diesem Fall können die Nebenanschlüsse NA1, NA2 nicht mit einem Antennenanschluss AA1, AA2, AA3 verbunden werden.

Die weiteren Wechselschaltelemente 5 können in einem Zustand einer fehlenden oder nicht ausreichenden Energieversorgung einen vorbestimmten Schaltzustand einnehmen. In einem solchen Schaltzustand kann beispielsweise der zweite Nebenanschluss NA2 galvanisch mit dem dritten Antennenanschluss AA3 verbunden sein. Weiter kann der zweite Hauptanschluss HA2 in diesem Zustand mit dem zweiten Antennenanschluss AA2 galvanisch verbunden sein. Fällt z.B. eine Energieversorgung der Vorrichtung 1 aus, beispielsweise falls das Fahrzeug verunfallt, so kann durch diese Signalverbindungen noch ein Sende-/Empfangsbetrieb des zweiten und dritten Endgeräts 2, 3 gewährleistet werden. Beispielsweise kann das dritte Endgerät 3 eine sogenannte eCall-Funktion ausführen, wobei beispielsweise ein Notsignal über den zweiten Nebenanschluss NA2 übertragen und über die dritte Antenne A3 gesendet werden kann.

Weiter umfasst die Vorrichtung 1 Widerstände 11. Diese können als Widerstände für die zu übertragenden Hochfrequenzsignale, also als Hochfrequenzwiderstände, ausgebildet sein. Diese Widerstände 11 sind hierbei jeweils mit einem Anschluss mit einem der Signalanschlüsse und mit einem Anschluss mit einem Referenzpotential, beispielsweise einem Massepotential, verbunden. Ein Wert des Widerstands 11 kann einstellbar sein.

Ein an den entsprechenden Signalanschluss angeschlossenes Endgerät erfasst somit als Ausgangswiderstand des entsprechenden Signalanschlusses den Widerstand. Dieser dient zur Simulierung eines Antennenkennwiderstandes für das Endgerät 2, 3. Somit detektiert ein an den entsprechenden Signalanschluss angeschlossenes Endgerät 2, 3 den gleichen Ausgangwiderstand wie im Falle einer unmittelbaren Verbindung des entsprechenden Signalanschlusses mit einer Antenne, obwohl diese nicht unmittelbar mit dem Signalanschluss verbunden ist.

Weiter umfasst die Vorrichtung 1 Einrichtungen 12 zur Erfassung eines Ausgangswiderstandes der Antennenanschlüsse AA1, ... AA3. Weicht der erfasste Ausgangswiderstand von einem gewünschten Antenennwiderstand ab oder liegt der erfasste Ausgangswiderstand außerhalb eines vorbestimmten Widerstandsbereiches für einen Antennenkennwiderstand, so kann die Auswerte- und Steuereinrichtung 6, die mit den Einrichtungen 12 zur Erfassung des Ausgangswiderstands signaltechnisch verbunden ist, eine fehlerhafte Antenne A1, ... A3 detektieren. Diese Information kann dann an ein übergeordnetes System 13 übertragen werden.

Auch ist es möglich, dass die Auswerte- und Steuereinrichtung 6 einen Widerstandswert der Widerstände 11 ändert, wenn eine nicht funktionsfähige Antenne A1, A2, A3 detektiert wurde. Wird beispielsweise eine fehlende Antennenverbindung zur ersten Antenne A1 detektiert, beispielsweise ein Kurzschluss oder Leerlauf am ersten Antennenanschluss AA1, so kann ein entsprechender Wert des Widerstandes 11, beispielsweise ein minimaler Widerstand oder ein maximaler Widerstand, eingestellt werden, der mit dem ersten Hauptanschluss HA1 verbunden ist. Somit kann ein mit dem ersten Hauptanschluss HA1 verbundenes Endgerät eine nicht wie gewünscht funktionsfähige Antennenverbindung detektieren und entsprechende Fehlerbehandlungsmaßnahmen einleiten.

### Bezugszeichenliste

- 1: Vorrichtung
- 2: zweites Endgerät
- 3: drittes Endgerät
- 4: Wechselschaltelement
- 5: weiteres Wechselschaltelement
- 6: Steuer- und Auswerteeinrichtung
- 7: Splitter-Element
- 8: Verstärkereinrichtung
- 9: Einrichtung zur Signalpegelerfassung
- 10: Umschaltelement
- 11: Widerstand
- 12: Einrichtung zur Erfassung eines Widerstandes
- 13: übergeordnetes System
- HA1, HA2, HA3: Hauptanschluss
- NA1, NA2: Nebenanschluss
- AA1, AA2, AA3: Antennenanschluss
- A1, A2, A3: Antenne
- SEV: Sende-/Empfangsverstärkereinrichtung
- EAE: Endgerätanschlusseinrichtung

## Patentansprüche

1. Vorrichtung zur Signalübertragung von und zu einer Mehrzahl von Endgeräten (2, 3), wobei die Vorrichtung (1) eine Anzahl von Signalanschlüssen und eine Anzahl von Antennenanschlüssen (AA1, AA2, AA3) aufweist, wobei die Vorrichtung (1) mindestens zwei Antennenanschlüsse (AA1, AA2, AA3) aufweist, wobei ein Signalanschluss ein Hauptanschluss (HA1, HA2, HA3) oder ein Nebenanschluss (NA1, NA2) ist, wobei die Vorrichtung (1) für jedes anschließbare Endgerät (2, 3) mindestens einen Hauptanschluss (HA1, HA2, HA3) aufweist, wobei die Anzahl von Signalanschlüssen größer als die Anzahl von Antennenanschlüssen (AA1, AA2, AA3) ist, wobei die Vorrichtung (1) weiter mindestens ein Verbindungselement umfasst, wobei jeder Hauptanschluss (HA1, HA2, HA3) mit jedem Antennenanschluss (AA1, AA2, AA3) über eine Signalverbindung verbindbar ist, wobei die Vorrichtung (1) mindestens eine Einrichtung zur Sendeaktivitätsdetektion umfasst,
**dadurch gekennzeichnet, dass**
durch die Einrichtung zur Sendeaktivitätsdetektion ein sendeaktiver Hauptanschluss (HA1, HA2, HA3) in Abhängigkeit einer Signaleigenschaft eines Signals detektierbar ist, wobei ein sendeaktiver Hauptanschluss (HA1, HA2, HA3) detektierbar ist, wenn ein Signalpegel des Signals größer als ein vorbestimmter Schwellwert ist, wobei das Signal auf einem Signalverbindungsabschnitt, der mit dem Hauptanschluss (HA1, HA2, HA3) verbunden ist, anliegt, wobei signaltechnische Verbindungen der Signalanschlüsse mit den Antennenanschlüssen (AA1, AA2, AA3) in Abhängigkeit der detektierten sendeaktiven Hauptanschlüsse (HA1, HA2, HA3) herstellbar sind, wobei mindestens ein Signalanschluss (HA1, HA2, HA3, NA1, NA2) bei nicht ausreichender Energieversorgung der Vorrichtung (1) mit einem Antennenanschluss (AA1, AA2, AA3) verbindbar ist.

2. Vorrichtung nach Anspruch 1, **dadurch gekennzeichnet, dass** die Verbindung der Hauptanschlüsse (HA1, HA2, HA3) und der Nebenanschlüsse (NA1, NA2) mit den Antennenanschlüssen (AA1, AA2, AA3) in Abhängigkeit einer vorbekannten Zuordnungsvorschrift erfolgt.

3. Vorrichtung nach Anspruch 1 oder 2, **dadurch gekennzeichnet, dass** alle Hauptanschlüsse (HA1, HA2, HA3) mit einem der Antennenanschlüsse (AA1, AA2, AA3) verbunden werden und mindestens ein Nebenanschluss (NA1, NA2) mit einem der verbleibenden Antennenanschlüsse (AA1, AA2, AA3) verbunden wird, wenn kein sendeaktiver Hauptanschluss (HA1, HA2, HA3) detektiert wird.

4. Vorrichtung nach einem der Ansprüche 1 bis 3, **dadurch gekennzeichnet, dass** ein sendeaktiver Hauptanschluss (HA1, HA2, HA3) mit einem der Antennenanschlüsse (AA1, AA2, AA3) verbunden wird, wobei die verbleibenden Hauptanschlüsse (HA1, HA2, HA3) mit einem der verbleibenden Antennenanschlüsse (AA1, AA2, AA3) verbunden werden, wobei mindestens ein Nebenanschluss (NA1, NA2) mit einem weiteren der verbleibenden Antennenanschlüsse (AA1, AA2, AA3) verbunden wird, wenn genau ein sendeaktiver Hauptanschluss (HA1, HA2, HA3) detektiert wird.

5. Vorrichtung nach einem der Ansprüche 1 bis 4, **dadurch gekennzeichnet, dass** die sendeaktiven Hauptanschlüsse (HA1, HA2, HA3) jeweils mit voneinander verschiedenen Antennenanschlüssen (AA1, AA2, AA3) verbunden werden, wobei die verbleibenden Hauptanschlüsse (HA1, HA2, HA3) mit einem der verbleibenden Antennenanschlüsse (AA1, AA2, AA3) verbunden werden, wenn mehr als ein sendeaktiver Hauptanschluss (HA1, HA2, HA3) detektiert wird, jedoch nicht alle Hauptanschlüsse (HA1, HA2, HA3) sendeaktiv sind.

6. Vorrichtung nach Anspruch 5, **dadurch gekennzeichnet, dass** ein Nebenanschluss (NA1, NA2), der demselben Endgerät (2, 3) wie einer der sendeaktiven Hauptanschlüsse (HA1, HA2, HA3) zugeordnet ist, mit dem verbleibenden Antennenanschluss (AA1, AA2, AA3) verbunden wird.

7. Vorrichtung nach einem der Ansprüche 1 bis 6, **dadurch gekennzeichnet, dass** die sendeaktiven Hauptanschlüsse (HA1, HA2, HA3) jeweils mit voneinander verschiedenen Antennenanschlüssen (AA1, AA2, AA3) verbunden werden, wenn alle Hauptanschlüsse (HA1, HA2, HA3) als sendeaktive Hauptanschlüsse (HA1, HA2, HA3) detektiert werden.

8. Vorrichtung nach einem der Ansprüche 1 bis 7, **dadurch gekennzeichnet, dass** die Signalverbindung von sendeaktiven Hauptanschlüssen (HA1, HA2, HA3) mit den Antennenanschlüssen (AA1, AA2, AA3) in Abhängigkeit mindestens einer Antenneneigenschaft hergestellt wird.

9. Vorrichtung nach einem der Ansprüche 1 bis 8, **dadurch gekennzeichnet, dass** die Vorrichtung (1) mindestens einen Widerstand (11) umfasst, wobei der Widerstand (11) galvanisch mit einem Signalanschluss verbunden ist, wobei der Widerstand (11) einen Antennenkennwiderstand simuliert.

10. Vorrichtung nach einem der Ansprüche 1 bis 9, **dadurch gekennzeichnet, dass** die Vorrichtung (1) mindestens eine Einrichtung zur Prüfung einer Funktionsfähigkeit einer mit einem Antennenanschluss (AA1, AA2, AA3) verbundenen Antenne (A1, A2, A3) umfasst.

11. Vorrichtung nach einem der Ansprüche 2 bis 10, **dadurch gekennzeichnet, dass** die Zuordnungsvorschrift in Abhängigkeit der Anzahl funktionsfähiger Antennen (A1, A2, A3) auswählbar ist.

12. Vorrichtung nach einem der Ansprüche 1 bis 11, **dadurch gekennzeichnet, dass** ein Nebenanschluss (NA1, NA2) ein Mehrwegeempfangs-Anschluss oder ein Backup-Anschluss ist.

13. Verfahren zur Signalübertragung von und zu einer Mehrzahl von Endgeräten (2, 3) mittels einer Vorrichtung (1) gemäß einer der Ansprüche 1 bis 12, wobei ein sendeaktiver Hauptanschluss (HA1, HA2, HA3) in Abhängigkeit einer Signaleigenschaft eines Signals detektiert wird, wobei ein sendeaktiver Hauptanschluss (HA1, HA2, HA3) detektiert wird, wenn ein Signalpegel des Signals größer als ein vorbestimmter Schwellwert ist, wobei signaltechnische Verbindungen der Signalanschlüsse mit den Antennenanschlüssen (AA1, AA2, AA3) in Abhängigkeit der detektierten sendeaktiven Hauptanschlüsse (HA1, HA2, HA3) hergestellt werden, wobei mindestens ein Signalanschluss (HA1, HA2, HA3, NA1, NA2) bei nicht ausreichender Energieversorgung der Vorrichtung (1) mit einem Antennenanschluss (AA1, AA2, AA3) verbindbar ist.

14. Verfahren nach Anspruch 13, **dadurch gekennzeichnet, dass** die signaltechnischen Verbindungen unabhängig von vorrichtungsexternen Steuersignalen hergestellt werden.

## Claims

1. Apparatus for transmitting signals from and to a plurality of terminals (2, 3), wherein the apparatus (1) has a number of signal connections and a number of antenna connections (AA1, AA2, AA3), wherein the apparatus (1) has at least two antenna connections (AA1, AA2, AA3), wherein one signal connection is a primary connection (HA1, HA2, HA3), or a secondary connection (NA1, NA2), wherein the apparatus (1) has at least one primary connection (HA1, HA2, HA3) for each terminal (2, 3) which can be connected, wherein the number of signal connections is greater than the number of antenna connections (AA1, AA2, AA3), wherein the apparatus (1) also comprises at least one linking element, wherein each primary connection (HA1, HA2, HA3) can be linked to each antenna connection (AA1, AA2, AA3) via a signal link, wherein the apparatus (1) comprises at least one device for detecting transmitting activity,
**characterised in that**
by means of the device for detecting transmitting activity, an actively transmitting main connection (HA1, HA2, HA3) can be detected on the basis of a signal characteristic of a signal, wherein an actively transmitting main connection (HA1, HA2, HA3) can be detected when a signal level of the signal is greater than a predetermined threshold value, wherein the signal is present on a signal link section which is linked to the main connection (HA1, HA2, HA3), wherein signaling links between the signal connections and the antenna connections (AA1, AA2, AA3) can be established on the basis of the detected actively transmitting main connections (HA1, HA2, HA3), wherein, in the event of an inadequate energy supply to the apparatus (1), at least one signal connection (HA1, HA2, HA3, NA1, NA2) can be connected to an antenna connection (AA1, AA2, AA3).

2. Apparatus according to claim 1, **characterised in that** the connection of the primary connections (HA1, HA2, HA3) and the secondary connections (NA1, NA2) to the antenna connections (AA1, AA2, AA3) is made on the basis of a predetermined assignment rule.

3. Apparatus according to claim 1 or 2, **characterised in that** all the primary connections (HA1, HA2, HA3) are connected to one of the antenna connections (AA1, AA2, AA3), and at least one secondary connection (NA1, NA2) is connected to one of the remaining antenna connections (AA1, AA2, AA3) if no actively transmitting primary connection (HA1, HA2, HA3) is detected.

4. Apparatus according to any one of claims 1 to 3, **characterised in that** an actively transmitting primary connection (HA1, HA2, HA3) is connected to one of the antenna connections (AA1, AA2, AA3), wherein the remaining primary connections (HA1, HA2, HA3) are connected to one of the remaining antenna connections (AA1, AA2, AA3), wherein at least one secondary connection (NA1, NA2) is connected to one further of the remaining antenna connections (AA1, AA2, AA3) when exactly one actively transmitting primary connection (HA1, HA2, HA3) is detected.

5. Apparatus according to any one of claims 1 to 4, **characterised in that** the actively transmitting primary connections (HA1, HA2, HA3) are each connected to antenna connections (AA1, AA2, AA3) which are different from one another, wherein the remaining primary connections (HA1, HA2, HA3) are connected to one of the remaining antenna connections (AA1, AA2, AA3) if more than one actively transmitting primary connection (HA1, HA2, HA3) is detected, but not all the primary connections (HA1, HA2, HA3) are actively transmitting.

6. Apparatus according to claim 5, **characterised in that** a secondary connection (NA1, NA2) which is assigned to the same terminal (2, 3) as one of the actively transmitting primary connections (HA1, HA2, HA3) is connected to the remaining antenna connection (AA1, AA2, AA3).

7. Apparatus according to any one of claims 1 to 6, **characterised in that** the actively transmitting primary connections (HA1, HA2, HA3) are each connected to antenna connections (AA1, AA2, AA3) which are different from one another, if all the primary connections (HA1, HA2, HA3) are detected as being actively transmitting primary connections (HA1, HA2, HA3).

8. Apparatus according to any one of claims 1 to 7, **characterised in that** the signal connection of actively transmitting primary connections (HA1, HA2, HA3) to the antenna connections (AA1, AA2, AA3) is established on the basis of at least one antenna.

9. Apparatus according to any one of claims 1 to 8, **characterised in that** the apparatus (1) comprises at least one resistor (11), wherein the resistor (11) is galvanically connected to a signal connection, wherein the resistor (11) simulates an antenna characteristic resistance.

10. Apparatus according to any one of claims 1 to 9, **characterised in that** the apparatus (1) comprises at least one device for testing a funcionality of an antenna (A1, A2, A3) connected to an antenna connection (AA1, AA2, AA3).

11. Apparatus according to any one of claims 2 to 10, **characterised in that** the assignment rule can be selected on the basis of the number of functional antennas (A1, A2, A3).

12. Apparatus according to any one of claims 1 to 11, **characterised in that** a secondary connection (NA1, NA2) is a multi-path reception connection or a backup connection.

13. Method for transmitting signals from and to a plurality of terminals (2, 3) by means of an apparatus (1), according to any one of claims 1 to 12, wherein an actively transmitting primary connection (HA1, HA2, HA3) is detected on the basis of a signal characteristic of a signal, wherein an actively transmitting primary connection (HA1, HA2, HA3) is detected when a signal level of the signal is greater than a predetermined threshold, wherein signaling links of the signal connections are established with the antenna connections (AA1, AA2, AA3) on the basis of the detected actively transmitting primary connections (HA1, HA2, HA3), wherein, in the event of an inadequate energy supply to the apparatus (1), at least one signal connection (HA1, HA2, HA3, NA1, NA2) can be connected to an antenna connection (AA1, AA2, AA3).

14. Method according to claim 13, **characterised in that** the signaling links are established independently of apparatus-external control signals.

## Revendications

1. Dispositif de transmission de signaux vers et depuis une pluralité d'appareils terminaux (2, 3), dans lequel le dispositif (1) comprend un nombre de bornes de signaux et un nombre de bornes d'antennes (AA1, AA2, AA3), dans lequel le dispositif (1) comprend au moins deux bornes d'antennes (AA1, AA2, AA3), dans lequel une borne de signal est une borne principale (HA1, HA2, HA3) ou une borne auxiliaire (NA1, NA2), dans lequel le dispositif (1) comprend pour chaque appareil terminal raccordable (2, 3) au moins une borne principale (HA1, HA2, HA3), dans lequel le nombre de bornes de signaux est plus grand que le nombre de bornes d'antennes (AA1, AA2, AA3), dans lequel le dispositif (1) comporte en outre au moins un élément de liaison, dans lequel chaque borne principale (HA1, HA2, HA3) peut être reliée à chaque borne d'antenne (AA1, AA2, AA3) par un biais d'une liaison de signal, dans lequel le dispositif (1) comporte au moins un équipement pour la détection d'activité d'émission,
**caractérisé en ce que**
par l'équipement pour la détection d'activité d'émission, une borne principale active en émission (HA1, HA2, HA3) peut être détectée en fonction d'une propriété de signal d'un signal, dans lequel une borne principale active en émission (HA1, HA2, HA3) peut être détectée lorsqu'un niveau de signal du signal est plus grand qu'une valeur de seuil prédéfinie, dans lequel le signal est situé sur une section de liaison de signal, qui est relié à la borne principale (HA1, HA2, HA3), dans lequel des liaisons, selon la technique des signaux, des bornes de signaux aux bornes d'antennes (AA1, AA2, AA3) peuvent être réalisées en fonction des bornes principales actives en émission détectées (HA1, HA2, HA3), dans lequel au moins une borne de signal (HA1, HA2, HA3, NA1, NA2) peut être reliée, en cas d'alimentation en énergie insuffisante du dispositif (1), à une borne d'antenne (AA1, AA2, AA3).

2. Dispositif selon la revendication 1, **caractérisé en ce que** la liaison des bornes principales (HA1, HA2, HA3) et des bornes auxiliaires (NA1, NA2) aux bornes d'antennes (AA1, AA2, AA3) est effectuée en fonction d'une directive d'association précédemment connue.

3. Dispositif selon la revendication 1 ou 2, **caractérisé en ce que** toutes les bornes principales (HA1, HA2, HA3) sont reliées à une des bornes d'antennes (AA1, AA2, AA3) et au moins une borne auxiliaire (NA1, NA2) est reliée à une des bornes d'antennes restantes (AA1, AA2, AA3) lorsqu'aucune borne principale active en émission (HA1, HA2, HA3) n'est détectée.

4. Dispositif selon l'une quelconque des revendications 1 à 3, **caractérisé en ce qu'**une borne principale active en émission (HA1, HA2, HA3) est reliée à une des bornes d'antennes (AA1, AA2, AA3), dans lequel les bornes principales restantes (HA1, HA2, HA3) sont reliées à une des bornes d'antennes restantes (AA1, AA2, AA3), dans lequel au moins une borne auxiliaire (NA1, NA2) est reliée à une autre des bornes d'antennes restantes (AA1, AA2, AA3) lorsque précisément une borne principale active en émission (HA1, HA2, HA3) est détectée.

5. Dispositif selon l'une quelconque des revendications 1 à 4, **caractérisé en ce que** les bornes principales actives en émission (HA1, HA2, HA3) sont reliées respectivement à des bornes d'antennes différentes les unes des autres (AA1, AA2, AA3), dans lequel les bornes principales restantes (HA1, HA2, HA3) sont reliées à une des bornes d'antennes restantes (AA1, AA2, AA3) lorsque plus d'une borne principale active en émission (HA1, HA2, HA3) est détectée, mais que toutes les bornes principales (HA1, HA2, HA3) ne sont pas actives en émission.

6. Dispositif selon la revendication 5, **caractérisé en ce qu'**une borne auxiliaire (NA1, NA2), qui est associée au même appareil terminal (2, 3) qu'une des bornes principales actives en émission (HA1, HA2, HA3), est reliée à la borne d'antenne restante (AA1, AA2, AA3).

7. Dispositif selon l'une quelconque des revendications 1 à 6, **caractérisé en ce que** les bornes principales actives en émission (HA1, HA2, HA3) sont reliées respectivement à des bornes d'antennes différentes les unes des autres (AA1, AA2, AA3) lorsque toutes les bornes principales (HA1, HA2, HA3) sont détectées comme étant des bornes principales actives en émission (HA1, HA2, HA3).

8. Dispositif selon l'une quelconque des revendications 1 à 7, **caractérisé en ce que** la liaison de signal de bornes principales actives en émission (HA1, HA2, HA3) aux bornes d'antennes (AA1, AA2, AA3) est réalisée en fonction d'une propriété d'antenne.

9. Dispositif selon l'une quelconque des revendications 1 à 8, **caractérisé en ce que** le dispositif (1) comporte au moins une résistance (11), dans lequel la résistance (11) est reliée de manière galvanique à une borne de signal, dans lequel la résistance (11) simule une résistance caractéristique d'antenne.

10. Dispositif selon l'une quelconque des revendications 1 à 9, **caractérisé en ce que** le dispositif (1) comporte au moins un équipement pour la vérification d'un état de fonctionnement d'une antenne (A1, A2, A3) reliée à une borne d'antenne (AA1, AA2, AA3).

11. Dispositif selon l'une quelconque des revendications 2 à 10, **caractérisé en ce que** la directive d'association peut être sélectionnée en fonction du nombre d'antennes en état de fonctionnement (A1, A2, A3).

12. Dispositif selon l'une quelconque des revendications 1 à 11, **caractérisé en ce qu'**une borne auxiliaire (NA1, NA2) est une borne de réception multivoie ou une borne de secours.

13. Procédé de transmission de signaux depuis et vers une pluralité d'appareils terminaux (2, 3) au moyen d'un dispositif (1) selon l'une quelconque des revendications 1 à 12, dans lequel une borne principale active en émission (HA1, HA2, HA3) est détectée en fonction d'une propriété de signal d'un signal, dans lequel une borne principale active en émission (HA1, HA2, HA3) est détectée lorsqu'un niveau de signal du signal est plus grand qu'une valeur de seuil prédéfinie, dans lequel des liaisons, selon la technique des signaux, des bornes de signaux aux bornes d'antennes (AA1, AA2, AA3) sont réalisées en fonction des bornes principales actives en émission détectées (HA1, HA2, HA3), dans lequel au moins une borne de signal (HA1, HA2, HA3, NA1, NA2) peut être reliée, en cas d'alimentation en énergie insuffisante du dispositif (1), à une borne d'antenne (AA1, AA2, AA3).

14. Procédé selon la revendication 13, **caractérisé en ce que** les liaisons selon la technique des signaux sont réalisées indépendamment de signaux de commande externes au dispositif.
